# EUROPÄISCHE PATENTSCHRIFT

(11) **EP 3 652 839 B1**
(45) Veröffentlichungstag und Bekanntmachung des Hinweises auf die Patenterteilung: **08.03.2023**
(21) Anmeldenummer: 18753114.0
(22) Anmeldetag: 01.08.2018
(51) Int. Cl.: H02K 3/12, H02K 3/14, H02K 3/24, H02K 3/26, H02K 3/50, H02K 15/00

(54) **STATOR FÜR EINE ELEKTRISCHE ROTIERENDE MASCHINE**
ROTOR FOR AN ELECTRIC ROTATING MACHINE
STATOR POUR UNE MACHINE ROTATIVE ÉLECTRIQUE

(30) Priorität: 29.08.2017 EP 17188366
(43) Veröffentlichungstag der Anmeldung: 20.05.2020
(73) Patentinhaber: Siemens Aktiengesellschaft, 80333 München (DE)
(72) Erfinder: KÜMMLEE, Horst, 13505 Berlin (DE)
(74) Vertreter: Siemens Patent Attorneys
(86) Internationale Anmeldenummer: PCT/EP2018/070838
(87) Internationale Veröffentlichungsnummer: WO 2019/042690

(56) Entgegenhaltungen:
- WO-A1-2013/185839
- WO-A1-2015/130331
- WO-A1-2017/050447
- DE-A1-102015 221 923
- DE-T5-112007 000 629
- US-A- 1 653 784
- US-A1- 2009 096 313

## Beschreibung

Die Erfindung betrifft einen Stator für eine elektrische rotierende Maschine, insbesondere zur Verwendung in einem Gondelantrieb, welcher ein Statorblechpaket mit Spulen aufweist.

Außerdem betrifft die Erfindung eine elektrische rotierende Maschine mit mindestens einem derartigen Stator.

Ferner betrifft die Erfindung einen Gondelantrieb mit mindestens einer derartigen elektrischen rotierenden Maschine.

Darüber hinaus betrifft die Erfindung ein Wasserfahrzeug, insbesondere ein Schiff, mit mindestens einem derartigen Gondelantrieb.

Desweiteren betrifft die Erfindung ein Verfahren zur Herstellung eines derartigen Stators.

Ein derartiger Stator kommt bevorzugt in einer elektrischen rotierenden Maschine, insbesondere in einem Motor oder Generator, vor, die im Schiffsbau eingesetzt wird und eine Leistungsaufnahme von mindestens einem Megawatt aufweist.

Üblicherweise werden die Statorwicklungen einer derartigen elektrischen rotierenden Maschine als Formspulen ausgeführt. Formspulen werden beispielsweise aus gezogenen Halbzeugen, insbesondere Rechteckbändern, hergestellt, die dann, beispielsweise zu einem Oval, aufgewickelt und anschließend tangential in eine endgültige Form umgeformt werden. An den Enden der Formspulen befindet sich ein Wickelkopf, der durch Biegen und Abkröpfen der Leiter der Formspulen entsteht. Dieser Wickelkopf benötigt einen erheblichen axialen Bauraum. Durch die zusätzliche inaktive Leiterlänge des Wickelkopfes entstehen ohmsche Verluste, die den Wirkungsgrad der elektrischen rotierenden Maschine verringern. Darüber hinaus ist es

erforderlich, die Wickelköpfe zu kühlen. Zur Kühlung und zur Einhaltung von erforderlichen Isolationsabständen zwischen den spannungsführenden Spulen wird weiterer Bauraum benötigt.

Insbesondere bei schnelllaufenden niederpoligen Maschinen wirkt sich der durch die Wickelköpfe vergrößerte Lagerabstand nachteilig auf die Rotordynamik aus. Ferner sind zusätzliche aufwendige Versteifungsmaßnahmen aufgrund der großen Leiterlängen erforderlich, um unzulässige Schwingungen und Verformungen im Betrieb und bei Störfällen, beispielsweise Kurzschlüssen, zu verhindern. Darüber hinaus erhöhen sich die Gesamtlänge und das Gewicht der elektrischen rotierenden Maschine. Insbesondere bei einem modularen Aufbau großer Maschinen, bei dem mehrere Teilmaschinen in Axialrichtung eine Gesamtmaschine bilden, entstehen aufgrund der Wickelköpfe erhebliche elektrisch nicht genutzte Längen.

Die Patentschrift DE 10 2009 032 882 B3 beschreibt ein Verfahren zur Herstellung einer Formspule für eine Etagenwicklung einer dynamoelektrischen Maschine sowie eine mittels des besagten Verfahrens hergestellte Formspule. Um die Herstellung der Formspule zu vereinfachen, wird diese aus einer Rohspule hergestellt, wobei die Rohspule zwei Längsseiten aufweist, die dafür vorgesehen sind, in Nuten eines Ständers oder eines Rotors der dynamoelektrischen Maschine eingelegt zu werden. Die Rohspule weist zwei Wickelkopfseiten auf, die dafür vorgesehen sind, jeweils einen Wickelkopf der Formspule zu bilden, wobei die Längsseiten um 90° derart gebogen werden, um die Längsseiten in die Nuten einzulegen und die Wickelkopfseiten von den Längsseiten abzukröpfen.

Die Offenlegungsschrift DE 199 14 942 A1 beschreibt ein Verfahren zur Herstellung einer Statorwicklung für eine elektrische Maschine und eine solche Statorwicklung. Die Maschine hat ausgeprägte Pole. Spulenleiter ragen mit ihren Enden in axialer Richtung über das Statorblechpaket hinaus und sind in Klemmen von Baugruppen befestigt. Auf den Baugruppen befinden sich Leiterbahnen, die die Windungen mit den Leitern bilden bzw. von Klemmen zu externen Anschlußstellen verlaufen.

Die Patentschrift EP 1 742 330 B1 beschreibt einen Ständerwickelkopf für ein Ständerteil eines Turbogenerators. Der Ständerwickelkopf ist in Form einer Scheibe mit einer mittigen Auslassung zur Durchführung eines Läufers gebildet, wobei die Scheibe einen isolierenden Grundkörper aufweist, in den eine elektrische Verbindung zur Kontaktierung eines Ständerleiters integriert ist. Die Kontaktierung wird in Form einer Steckverbindung und/oder mit Durchkontaktierungen hergestellt.

Die Offenlegungsschrift DE 10 2014 207 621 A1 offenbart einen Stator einer elektrischen rotierenden Maschine, der einen Statorkern mit mehreren Schlitzen, eine segmentierte Wicklung mit mehreren Phasen sowie mehrere Basisplatten, die auf jedes Ende des Statorkerns in axialer Richtung geschichtet sind, enthält. Der Statorkern und mehrere Wicklungsstangen der segmentierten Wicklung bilden eine Statorkernanordnung. Die mehreren Basisplatten und mehrere Wicklungsendverbinder der segmentierten Wicklung bilden mehrere Basisplattenanordnungen. Der Stator ist durch die Statorkernanordnung und die mehreren Basisplattenanordnungen, die auf jedes Ende der Statorkernanordnung geschichtet sind, konfiguriert.

Die Offenlegungsschrift DE 10 2015 221 923 A1 beschreibt eine elektrische Maschine aufweisend einen Stator mit einer elektrischen Wicklung, die elektrisch leitfähige Stäbe aufweist, welche in Nuten des Stators angeordnet sind und von denen jeder im Bereich der Nuten eine erste Querschnittsfläche aufweist, und eine Wechselrichterschaltung zum gesteuerten Bestromen der Wicklung, wobei die Wechselrichterschaltung mit der Wicklung und/oder die Stäbe untereinander über zumindest eine Leiterplattenanordnung elektrisch verbunden sind.

Die Patentschrift US 1,653,784 A beschreibt eine elektrische Maschine mit einem Läufer, der mit einer Vielzahl von axial angeordneten Schlitzen versehen ist, wobei Wicklungen in den Schlitzen angeordnete Stäbe aufweisen. Verbinder verbinden die Stäbe an den Enden der Schlitze, wobei die Verbinder im Wesentlichen rechteckige Stäbe umfassen, die im Querschnitt über ihre gesamte Länge im Wesentlichen gleichmäßig angeordnet sind. Die verbindenden Stäbe bestehen aus einer Vielzahl von Strängen, die die Stäbe in Richtung ihrer Breite in einer Ebene senkrecht zu den Achsen der Schlitze unterteilen, wobei die Stränge in Bezug zueinander ineinander greifen, um unterschiedliche Positionen der Breite der Verbindungsstange einzunehmen, die sie umfassen, während sie eine gleichmäßige Querschnittsfläche der letzteren gewährleisten.

Die Offenlegungsschrift US 2009/096313 A1 beschreibt einen Stator mit einem Statorkern, der eine Vielzahl von Schlitzen in einer Richtung parallel zur rotierenden Welle einer rotierenden elektrischen Maschine aufweist; und einem Spulenplattenkörper, der durch Laminieren einer Vielzahl von I-förmigen Spulenplatten gebildet ist, von denen jede einen isolierenden Film aufweist, der zumindest auf einer Seite in einer Richtung des Durchmessers haftet. In den Spulenplattenkörper werden mehrere Spulenplatten in einen in die Schlitze eingesetzten Harzisolator eingesetzt, so dass der Isolierfilm zwischen den Spulenplatten angeordnet ist und die Spulenplatten vom Harzisolator integral gehalten werden.

Die Offenlegungsschrift WO 2015/130331 A1 beschreibt eine Vorrichtung, wie eine Spule, bei der jedes elektrische Leitermaterial von einem magnetischen Metall/Material umschlossen wird, um das gesamte erzeugte Magnetfeld, das in einer geschlossenen Schleife durch einen Kern geleitet wird, zu verstärken und in ein gewünschte Richtung auszurichten.

Die Offenlegungsschrift WO 2017/050447 A1 beschreibt eine elektrische rotierende Maschine aufweisend einen um eine Rotationsachse drehbaren Rotor mit einem Läuferrohr und einem Wellenstummel, wobei der Wellenstummel an einer Nichtantriebsseite der elektrischen rotierenden Maschine angeordnet ist und wobei das Läuferrohr an einem axialen Ende des Läuferrohrs mechanisch mit dem Wellenstummel verbunden ist. Um Platz und Kosten einzusparen, wird vorgeschlagen, dass der Wellenstummel eine Mittelbohrung und/oder parallele Bohrungen aufweist, welche zur Zuführung eines Kühlmediums in das Läuferrohr vorgesehen sind, wobei das Läuferrohr mindestens eine Kühlungsöffnung aufweist und wobei die Mittelbohrung und/oder die parallelen Bohrungen mit der mindestens einen Kühlungsöffnung in fluidtechnischer Verbindung stehen.

Die Offenlegungsschrift WO 2013/185839 A1 beschreibt ein Verfahren zur Herstellung eines optoelektronischen Halbleiterbauelements mit zumindest einem ersten Bauteil und einem zweiten Bauteil, wobei auf dem ersten Bauteil ein Sintermaterial aufgebracht wird, das zweite Bauteil auf dem Sintermaterial platziert wird und das Sintermaterial unter Einwirkung von Wärme, Druck und Ultraschall während einer Sinterzeit zu einer Verbindungsschicht zwischen dem ersten und zweiten Bauteil versintert wird.

Der Erfindung liegt die Aufgabe zugrunde, einen Stator für eine elektrische rotierende Maschine bereitzustellen, der bei einer geringen axialen Länge, im Vergleich zum Stand der Technik, verbesserte elektrische und mechanische Eigenschaften aufweist.

Die Aufgabe wird erfindungsgemäß durch einen Stator für eine elektrische rotierende Maschine gelöst, welcher ein Statorblechpaket mit Spulen aufweist, wobei die Spulen jeweils mindestens einen Nutabschnitt, mindestens einen Wickelkopfabschnitt und mindestens einen Verbindungsabschnitt aufweisen, wobei der Wickelkopfabschnitt als Statorwickelkopfplatine ausgestaltet ist, welche an einer Stirnseite des Statorblechpakets angeordnet ist und in einen isolierenden Grundkörper integrierte Leiterbahnen aufweist, wobei jeweils ein Leiter des Nutabschnitts und eine Leiterbahn des Wickelkopfabschnitts in einem Verbindungsabschnitt verbunden sind, wobei die Leiter des Nutabschnitts jeweils eine erste Anzahl von voneinander elektrisch isolierten Teilleitern aufweisen und die Leiterbahnen des Wickelkopfabschnitts jeweils eine zweite Anzahl von voneinander elektrisch isolierten Teilleiterbahnen aufweisen und wobei die voneinander elektrisch isolierten Teilleiter des Nutabschnitts und die voneinander elektrisch isolierten Teilleiterbahnen des Wickelkopfabschnitts im Verbindungsabschnitt elektrisch leitend verbunden sind.

Weiterhin wird die Aufgabe erfindungsgemäß durch eine elektrische rotierende Maschine mit mindestens einem derartigen Stator gelöst.

Darüber hinaus wird die Aufgabe erfindungsgemäß durch einen Gondelantrieb mit mindestens einer derartigen elektrischen rotierenden Maschine gelöst.

Ferner wird die Aufgabe erfindungsgemäß durch ein Wasserfahrzeug, insbesondere ein Schiff, mit mindestens einem derartigen Gondelantrieb gelöst.

Desweiteren wird die Aufgabe erfindungsgemäß durch ein Verfahren zur Herstellung eines derartigen Stators gelöst, wobei die mindestens eine Statorwickelkopfplatine auf einer Stirnseite des Statorblechpakets aufgelegt wird und wobei daraufhin die Leiter des Nutabschnitts und die Leiterbahnen des Wickelkopfabschnitts, insbesondere stoffschlüssig, verbunden werden.

Die in Bezug auf den Stator nachstehend angeführten Vorteile und bevorzugten Ausgestaltungen lassen sich sinngemäß auf die elektrische rotierende Maschine, den Gondelantrieb, das Wasserfahrzeug und das Herstellungsverfahren übertragen.

Die Erfindung basiert auf der Idee, die axiale Länge des Stators einer elektrischen rotierenden Maschine mit einer Leistung von mindestens einem Megawatt durch Umgestaltung der Wickelköpfe, die in der Regel einen erheblichen axialen Bauraum benötigen, zu reduzieren. Während die Wicklungen im Nutabschnitt weiterhin in ihrer herkömmlichen Form als Spulenstäbe ausgebildet sind, sind die Wickelköpfe als Wickelkopfplatinen, welche insbesondere auf einer Stirnseite des Statorblechpakets aufliegen, ausgestaltet, in denen Leiterbahnen angeordnet sind, welche die jeweiligen Spulenstäbe miteinander verbinden. Die Leiterbahnen sind in einen isolierenden Grundkörper integriert, wobei der isolierende Grundkörper eine wärmeleitfähige Verbindung der Leiterbahnen mit dem Statorblechpaket herstellt. Ferner sind die Leiterbahnen durch den isolierenden Grundkörper gekapselt und damit vor Umwelteinflüssen, wie Feuchtigkeit, geschützt. Der isolierende Grundkörper enthält einen keramischen Werkstoff, beispielsweise Aluminiumoxid oder Aluminiumnitrit, mit einer hohen Wärmeleitfähigkeit, insbesondere mit einer Wärmeleitfähigkeit von mehr als 5 W/mK. Alternativ enthält der isolierende Grundkörper einen Kunststoff, der Anteile mindestens eines keramischen Werkstoffs aufweist. Insbesondere bei der Verwendung eines Kunststoffs ist es erforderlich, die Leiterbahnen zusätzlich, beispielsweise über Kühlkanäle, zu kühlen. Um die elektrischen Eigenschaften, insbesondere die Verluste, zu optimieren und eine Kühlung zu vereinfachen, wird eine erste Anzahl von Teilleitern des Nutabschnitts voneinander elektrisch isoliert. Zusätzlich oder alternativ weisen die Leiterbahnen der Statorwickelkopfplatine eine zweite Anzahl von voneinander elektrisch isolierten Teilleiterbahnen auf, welche voneinander isoliert in der Wickelkopfplatine verlaufen. Die als Spulenstäbe ausgeführten Leiter im Nutabschnitt und die Leiterbahnen der Statorwickelkopfplatine sind in einem Verbindungsabschnitt elektrisch leitend verbunden. Um die Anzahl der Verbindungsstellen zu minimieren, werden die voneinander elektrisch isolierten Teilleiter des Nutabschnitts und/oder die voneinander elektrisch isolierte Teilleiterbahnen der Statorwickelkopfplatine im Verbindungsabschnitt elektrisch leitend verbunden. Durch einen derartigen Kurzschluss der Teilleiter und/oder Teilleiterbahnen reduziert sich die Anzahl der Verbindungsstellen erheblich und es können größere Abstände zwischen den Verbindungsstellen gewählt werden, was die Isolation der einzelnen Windungen zueinander im Verbindungsabschnitt vereinfacht.

In einer bevorzugten Ausführungsform sind die voneinander elektrisch isolierten Teilleiter im Nutabschnitt, insbesondere nach Art eines Roebelstabes, verdrillt. Damit sind die einzelnen Teilleiter in Summe über die axiale Länge des Statorblechpakets gleichen magnetischen Randbedingungen ausgesetzt, sodass die elektrischen Verluste minimal sind.

Bei einer weiteren vorteilhaften Ausgestaltung sind die Leiter des Nutabschnitts und die jeweiligen Leiterbahnen des Wickelkopfabschnitts im Verbindungsabschnitt stoffschlüssig verbunden. Eine stoffschlüssige Verbindung wird beispielsweise durch Auffüllen des Verbindungsspaltes mit einem Metall, insbesondere Kupfer, durch ein Coldspray-Verfahren hergestellt. Alternativ wird die stoffschlüssige Verbindung durch Sintern, Löten und/oder Schweißen hergestellt. Eine derartige stoffschlüssige Verbindung ist langlebig, zuverlässig und weist einen geringen elektrischen und thermischen Widerstand auf.

Besonders vorteilhaft ist die stoffschlüssige Verbindung unter Verwendung von Nanopartikeln, insbesondere von Silber-Nanopartikeln, hergestellt. Derartige Nanopartikel weisen eine um einige hundert Kelvin niedrigere Schmelztemperatur auf als das entsprechende Metall. Es ist beispielsweise ein homogenes und haftfestes Silberlot aus Silber-Nanopartikeln bei ungefähr 230°C herstellbar, wobei das entstehende Silber nach dem Erstarren eine Schmelztemperatur von 961°C aufweist. Eine derartige stoffschlüssige Verbindung unter Verwendung von Nanopartikeln ist irreversibel, das heißt bei der Herstellung einer weiteren derartigen Verbindung schmilzt die vorhergehende Verbindung nicht ebenfalls.

Bei einer weiteren vorteilhaften Ausgestaltung sind im Verbindungsabschnitt zwischen den Leitern des Nutabschnitts und den jeweiligen Leiterbahnen des Wickelkopfabschnitts metallische Verbindungselemente angeordnet. Die metallischen Verbindungselemente sind insbesondere als Zwischenplättchen zur Überbrückung der Dicke einer Hauptisolierung ausgestaltet.

Besonders vorteilhaft sind die metallischen Verbindungselemente keilförmig ausgeführt. Eine keilförmige Ausführung, insbesondere als keilförmige Einzelteile, ermöglicht eine Aufbringung einer Vorspannkraft und ist zum Ausgleich von Toleranzen geeignet.

In einer weiteren vorteilhaften Ausgestaltung weist eine Spule mindestens zwei Windungen auf, wobei die Leiter der jeweiligen Windung, insbesondere im Nutabschnitt, durch eine mäanderförmig angeordnete Leiterisolierung voneinander elektrisch isoliert sind. Die mäanderförmige Leiterisolierung ist einstückig und dadurch schnell und kostengünstig zu montieren. Ferner wird eine wechselseitige Anbindung der Leiterbahnen ermöglicht, wodurch ohne weitere Isolationsmaßnahmen ein für die elektrische Isolierung zwischen den Verbindungsstellen der Leiterbahnen ausreichender Abstand erreicht wird.

Besonders vorteilhaft sind in der Statorwickelkopfplatine Kühlkanäle angeordnet. Durch die Kühlkanäle strömt zur Kühlung während des Betriebes ein Kühlfluid, welches die in den Leiterbahnen entstehende Wärme abführt. Insbesondere bei der Verwendung eines isolierenden Grundkörpers mit geringer Wärmeleitfähigkeit ist es erforderlich, die Leiterbahnen der Statorwickelkopfplatine über Kühlkanäle zu kühlen.

In einer bevorzugten Ausführungsform sind die Teilleiterbahnen, insbesondere äquidistant, um die Kühlkanäle angeordnet. Durch eine derartige Anordnung werden die Teilleiterbahnen im Wesentlichen gleichmäßig durch das Kühlmedium gekühlt, sodass die elektrischen Verluste in der Statorwickelkopfplatine minimiert werden.

Bei einer weiteren vorteilhaften Ausgestaltung ist die Statorwickelkopfplatine zumindest teilweise mit einem additiven Fertigungsverfahren hergestellt. Additive Fertigungsverfahren sind beispielsweise 3D-Druck und Siebdruck. Beispielsweise wird der isolierende Grundkörper mit einem 3D-Druck-Verfahren oder einem Siebdruckverfahren hergestellt und anschließend werden die Leiterbahnen, beispielsweise mit einem Druckgussverfahren, gegossen. Alternativ werden die Leiterbahnen mit einem 3D-Druck-Verfahren oder einem Siebdruckverfahren hergestellt. Anschließend wird der isolierende Grundkörper, beispielsweise mit einem Sinterverfahren, angebracht. Ein additives Fertigungsverfahren ermöglicht die Realisierung komplexer und kompakter Strukturen, was zu einer, insbesondere axialen, Verkleinerung der Statorwickelkopfplatine führt.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine,
- FIG 2: einen vergrößerten Längsschnitt einer ersten Ausführungsform eines Stators im Bereich einer Statorwickelkopfplatine,
- FIG 3: einen vergrößerten Querschnitt einer zweiten Ausführungsform eines Stators im Bereich einer Statorwickelkopfplatine,
- FIG 4: einen vergrößerten Ausschnitt einer Statorwickelkopfplatine und
- FIG 5: ein Schiff mit einem Gondelantrieb.

Gleiche Bezugszeichen haben in den verschiedenen Figuren die gleiche Bedeutung.

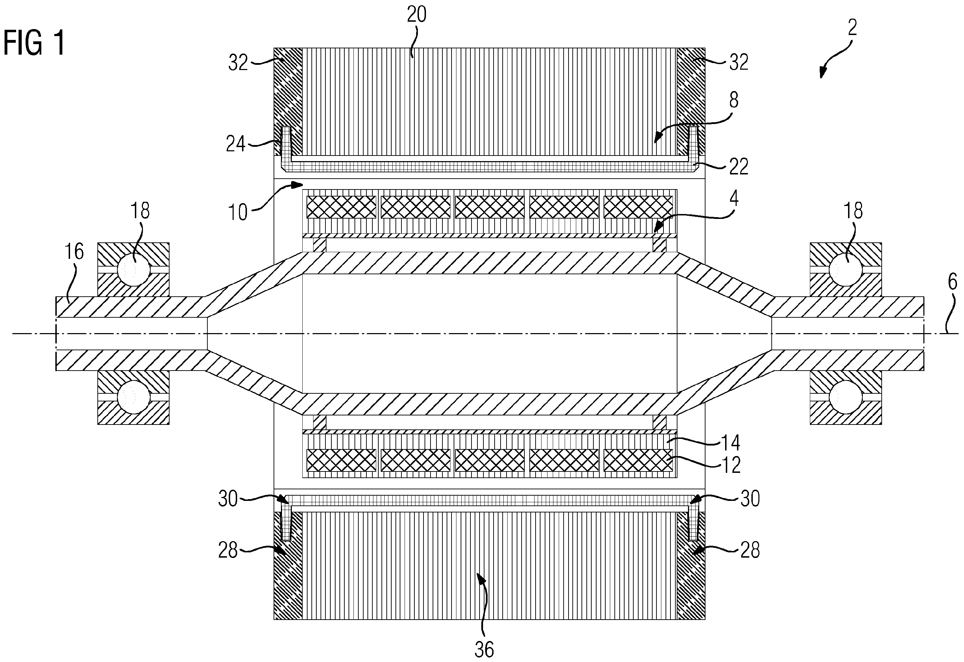

FIG 1 zeigt einen Längsschnitt einer elektrischen rotierenden Maschine 2, die einen Rotor 4, der um eine Rotationsachse 6 rotierbar ist, und einen den Rotor 4 umgebenden Stator 8 aufweist. Zwischen dem Rotor 4 und dem Stator 8 befindet sich ein Spalt 10, der bevorzugt als Luftspalt ausgeführt ist. Die Rotationsachse 6 definiert eine Axialrichtung, eine Radialrichtung und eine Umfangsrichtung. Die elektrische rotierende Maschine 2 ist exemplarisch als Synchronmaschine ausgeführt und weist Permanentmagnete 12 auf, welche zumindest teilweise in zumindest ein Rotorblechpaket 14 integriert sind. Das zumindest eine Rotorblechpaket 14 ist drehfest mit einer Welle 16 verbunden, die beispielhaft als Hohlwelle ausgeführt ist und über beidseitig angeordnete Lager 18 gelagert ist.

Der Stator 8 weist ein Statorblechpaket 20 mit Spulen 22 auf, wobei die Spulen 22 in Axialrichtung durch Nuten 24 des Statorblechpakets 20 verlaufen. Anschlüsse der Spulen 22, beispielsweise an einen Klemmenkasten, sind aus Gründen der Übersichtlichkeit nicht dargestellt. Die Spulen 22, welche beispielsweise aus Kupfer hergestellt sind, weisen Nutabschnitte 26 und Wickelkopfabschnitte 28 auf, wobei zwischen jeweils einem Nutabschnitt 26 und einem Wickelkopfabschnitt 28 ein Verbindungsabschnitt 30 angeordnet ist. Die Wickelkopfabschnitte 28 der Spulen 22 sind in Statorwickelkopfplatinen 32 angeordnet, welche an den Stirnseiten 32 des Statorblechpakets 16 aufliegen.

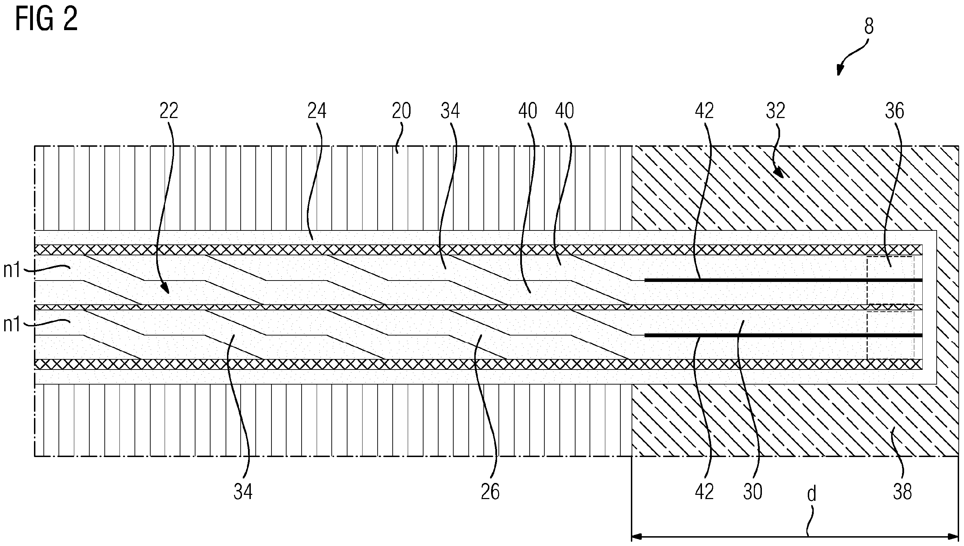

FIG 2 zeigt einen vergrößerten Längsschnitt einer ersten Ausführungsform eines Stators 8 im Bereich einer Statorwickelkopfplatine 32. Eine durch eine Nut 24 des Statorblechpakets 20 verlaufende Spule 22 weist beispielhaft zwei Windungen mit jeweils einem als Spulenstab ausgeführten Leiter 34 auf. Die Leiter 34 im Nutabschnitt 26 weisen jeweils eine erste Anzahl n1 von voneinander elektrisch isolierten Teilleitern 40 auf, welche, insbesondere nach Art eines Roebelstabes, verdrillt sind. Die erste Anzahl n1 der Teilleiter 40 beträgt pro Leiter 34 mindestens 2. Im Verbindungsabschnitt sind die voneinander elektrisch isolierten Teilleiter 40 durch eine elektrisch leitfähige Verbindung 42 kurzgeschlossen. Insbesondere ist die elektrisch leitfähige Verbindung 42 als stoffschlüssige Verbindung ausgeführt. Eine stoffschlüssige Verbindung wird beispielsweise durch Auffüllen des Verbindungsspaltes mit einem Metall, insbesondere Kupfer, durch ein Coldspray-Verfahren hergestellt. Alternativ wird die stoffschlüssige Verbindung durch einen drucklosen Sinterprozess, insbesondere bei einer Temperatur im Bereich von 200°C bis 300°C, hergestellt.

Bei einem derartigen drucklosen Sinterprozess werden die Teilleiter 40 mit Hilfe eines Verbindungswerkstoffs, welcher beim Erhitzen Nanopartikel, insbesondere Silbernanopartikel entwickelt, zusammengefügt, wobei sich bei weiterer Energiezufuhr eine schmelzflüssige Phase bildet, die bei einem darauffolgenden Erstarren eine irreversible Fügeverbindung zwischen den Teilleiter 40 ausbildet. Die Fügeverbindung wird als irreversibel bezeichnet, weil ihr Schmelzpunkt wesentlich höher als der der schmelzflüssigen Phase liegt. Insbesondere liegt der Schmelzpunkt des ausgehärteten Fügematerials im Bereich des Schmelzpunkts des verwendeten Metalls der Nanopartikel, beispielsweise bei Silber im Bereich von 900°C bis 1000°C. Bei der Herstellung einer weiteren derartigen Fügeverbindung schmilzt somit die vorhergehende Fügeverbindung nicht ebenfalls.

Alternativ wird die stoffschlüssige Verbindung durch Löten oder Schweißen hergestellt. Ebenfalls über eine stoffschlüssige Verbindung sind die Leiterbahnen 36 der Statorwickelkopfplatine 32 im Verbindungsabschnitt 30 mit den Leitern 34 des Nutabschnitts 26 verbunden. Die Leiterbahnen 36 sind in einen isolierenden Grundkörper 38 integriert, wobei der isolierende Grundkörper 38 eine wärmeleitfähige Verbindung der Leiterbahnen 36 mit dem Statorblechpaket 20 herstellt. Ferner sind die Leiterbahnen 36 durch den isolierenden Grundkörper 38 gekapselt. Der isolierende Grundkörper 38 enthält einen keramischen Werkstoff, beispielsweise Aluminiumoxid oder Aluminiumnitrit, mit einer hohen Wärmeleitfähigkeit, insbesondere mit einer Wärmeleitfähigkeit von mehr als 5 W/mK. Alternativ enthält der isolierende Grundkörper 38 einen Kunststoff, der Anteile mindestens eines keramischen Werkstoffs aufweist. Insbesondere bei der Verwendung eines Kunststoffs ist es erforderlich die Leiterbahnen 36 zusätzlich, beispielsweise über Kühlkanäle, zu kühlen.

Die Statorwickelkopfplatine 32, die eine Dicke d im Zentimeterbereich, insbesondere im Bereich zwischen 3 Zentimeter und 10 Zentimeter, aufweist, ist vollständig oder zumindest teilweise mit einem additiven Fertigungsverfahren hergestellt. Beispielsweise wird der isolierende Grundkörper 38 mit einem 3D-Druck-Verfahren oder einem Siebdruckverfahren hergestellt und anschließend werden die Leiterbahnen 36, beispielsweise mit einem Druckgussverfahren, gegossen. Alternativ werden die Leiterbahnen 36 mit einem 3D-Druck-Verfahren oder einem Siebdruckverfahren hergestellt. Anschließend wird der isolierende Grundkörper 38, beispielsweise mit einem Sinterverfahren, angebracht. Eine weitere Möglichkeit zur Herstellung der Statorwickelkopfplatine 32 ist, dass sowohl die Leiterbahnen 36 als auch der isolierende Grundkörper 38, bevorzugt zeitgleich, mit einem 3D-Druck-Verfahren oder einem Siebdruckverfahren hergestellt werden. Die weitere Ausführung des Stators 8 in FIG 2 entspricht der Ausführung in FIG 1.

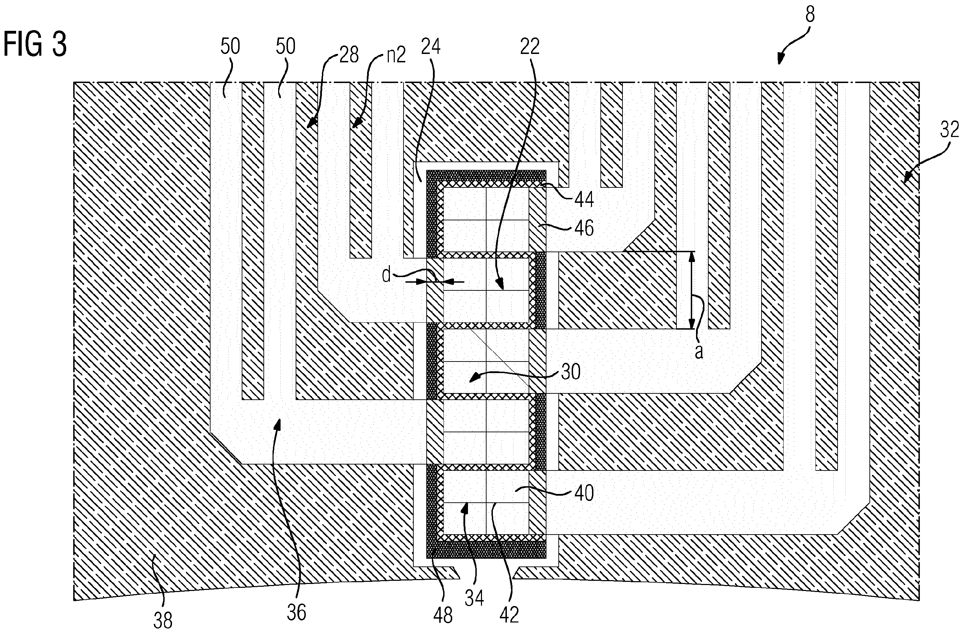

FIG 3 zeigt einen vergrößerten Querschnitt einer zweiten Ausführungsform eines Stators 8 im Bereich einer Statorwickelkopfplatine 32. Eine durch eine Nut 24 verlaufende Spule 22 weist beispielhaft fünf Windungen mit jeweils einem Leiter 34 auf, wobei die Windungen durch eine mäanderförmig angeordnete Leiterisolierung 44 voneinander elektrisch isoliert sind. Zwischen den Leitern 34 und den jeweiligen Leiterbahnen 36 der Statorwickelkopfplatine 32 sind metallische Verbindungselemente 46 angeordnet, welche im Verbindungsabschnitt 30 zwischen den Leitern 34 und den jeweiligen Leiterbahnen 36 eine elektrisch leitende Verbindung herstellen. Ferner wird durch die metallischen Verbindungselemente 46 eine Dicke d einer Hauptisolierung 48 überbrückt. Die metallischen Verbindungselemente 46 sind als Einzelteile ausgeführt. Zur Aufbringung einer Vorspannkraft und/oder zum Ausgleich von Toleranzen sind die metallischen Verbindungselemente 46 als, insbesondere keilförmige, Einzelteile ausgestaltet. Durch eine wechselseitige Anbindung der Leiterbahnen 36 ist ein, insbesondere elektrisch, ausreichender Abstand a zwischen den Verbindungsstellen der Leiterbahnen 36 gewährleitet. Im Wickelkopfabschnitt 28 innerhalb der Statorwickelkopfplatine 32 werden die Leiterbahnen 36 einer Windung jeweils in eine zweite Anzahl n2 von Teilleiterbahnen 50 aufgeteilt, um bessere mechanische Eigenschaften und eine verbesserte Kühlung der Teilleiterbahnen 50 durch eine Vergrößerung einer Kontaktfläche mit dem isolierenden Grundkörper 38 zu erzielen. Die zweite Anzahl n2 der Teilleiterbahnen 50 beträgt pro Leiterbahn 36 mindestens 2. Die weitere Ausführung des Stators 8 in FIG 3 entspricht der Ausführung in FIG 2.

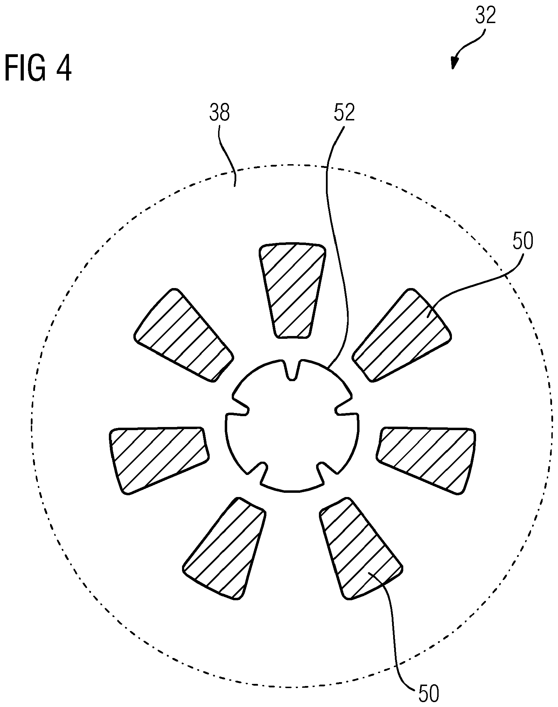

FIG 4 zeigt einen vergrößerten Ausschnitt einer Statorwickelkopfplatine 32, in welcher ein Kühlkanal 52 angeordnet ist. Der Kühlkanal 52 wird von einem Kühlmedium durchströmt. Teilleiterbahnen 50, welche beispielhaft einen kreisringsegmentförmigen Querschnitt aufweisen, sind äquidistant um den Kühlkanal 52 herum angeordnet, sodass die Teilleiterbahnen 50 im Wesentlichen gleichmäßig durch das Kühlmedium gekühlt werden. Die weitere Ausführung der Statorwickelkopfplatine 32 in FIG 4 entspricht der Ausführung in FIG 3.

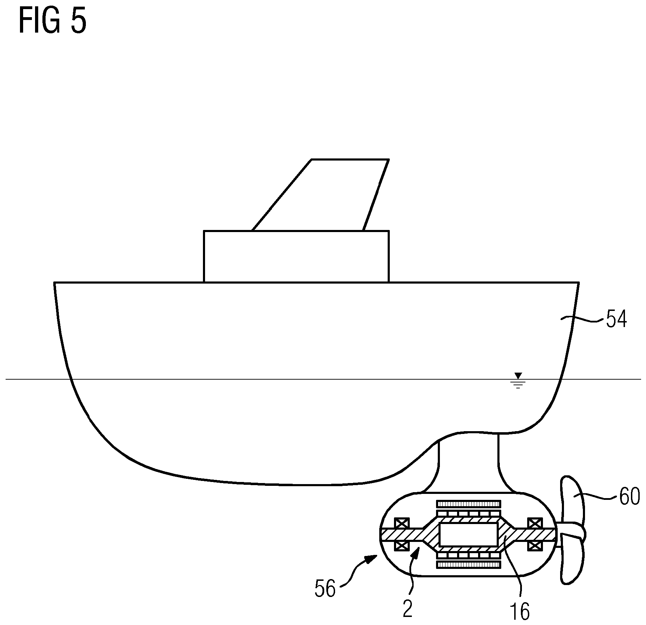

FIG 5 zeigt ein Wasserfahrzeug 54 mit einem Gondelantrieb 56. Der Gondelantrieb 56 befindet sich unter einer Wasseroberfläche und weist eine elektrische rotierende Maschine 2 und einen Propeller 60 auf, wobei der Propeller 60 über eine Welle 16 mit der elektrischen rotierenden Maschine 2 verbunden ist. Durch die Verwendung einer aus Gründen der Übersichtlichkeit in FIG 5 nicht dargestellten Statorwickelkopfplatine 32 weist der Gondelantrieb 56 eine geringe axiale Länge auf.

Zusammenfassend betrifft die Erfindung einen Stator 8 für eine elektrische rotierende Maschine 2, insbesondere zur Verwendung in einem Gondelantrieb 56, welcher ein Statorblechpaket 20 mit Spulen 22 aufweist. Um bei einer geringen axialen Länge, im Vergleich zum Stand der Technik, verbesserte elektrische und mechanische Eigenschaften zu erzielen, wird vorgeschlagen, dass die Spulen 22 jeweils mindestens einen Nutabschnitt 26, mindestens einen Wickelkopfabschnitt 28 und mindestens einen Verbindungsabschnitt 30 aufweisen, wobei der Wickelkopfabschnitt 28 als Statorwickelkopfplatine 32 ausgestaltet ist, welche an einer Stirnseite des Statorblechpakets 20 angeordnet ist und in einen isolierenden Grundkörper 38 integrierte Leiterbahnen 36 aufweist, wobei jeweils ein Leiter 34 des Nutabschnitts 26 und eine Leiterbahn 36 des Wickelkopfabschnitts 28 in einem Verbindungsabschnitt 30 verbunden sind, wobei die Leiter 34 des Nutabschnitts 26 jeweils eine erste Anzahl n1 von voneinander elektrisch isolierten Teilleitern 40 aufweisen und/oder die Leiterbahnen 36 des Wickelkopfabschnitts 28 jeweils eine zweite Anzahl n2 von voneinander elektrisch isolierten Teilleiterbahnen 50 aufweisen und wobei die voneinander elektrisch isolierten Teilleiter 40 des Nutabschnitts 26 und/oder die voneinander elektrisch isolierten Teilleiterbahnen 50 des Wickelkopfabschnitts 28 im Verbindungsabschnitt 30 elektrisch leitend verbunden sind.

## Patentansprüche

1. Stator (8) für eine elektrische rotierende Maschine (2), insbesondere zur Verwendung in einem Gondelantrieb (56), welcher ein Statorblechpaket (20) mit Spulen (22) aufweist, wobei die Spulen (22) jeweils mindestens einen Nutabschnitt (26), mindestens einen Wickelkopfabschnitt (28) und mindestens einen Verbindungsabschnitt (30) aufweisen,
wobei der Wickelkopfabschnitt (28) als Statorwickelkopfplatine (32) ausgestaltet ist, welche an einer Stirnseite des Statorblechpakets (20) angeordnet ist und in einen isolierenden Grundkörper (38) integrierte Leiterbahnen (36) aufweist,
wobei jeweils ein Leiter (34) des Nutabschnitts (26) und eine Leiterbahn (36) des Wickelkopfabschnitts (28) in einem Verbindungsabschnitt (30) verbunden sind, wobei
- die Leiter (34) des Nutabschnitts (26) jeweils eine erste Anzahl (n1) von voneinander elektrisch isolierten Teilleitern (40) aufweisen und
- die Leiterbahnen (36) des Wickelkopfabschnitts (28) jeweils eine zweite Anzahl (n2) von voneinander elektrisch isolierten Teilleiterbahnen (50) aufweisen und
wobei die voneinander elektrisch isolierten Teilleiter (40) des Nutabschnitts (26) und die voneinander elektrisch isolierten Teilleiterbahnen (50) des Wickelkopfabschnitts (28) im Verbindungsabschnitt (30) elektrisch leitend verbunden sind.

2. Stator (8) nach Anspruch 1,
wobei die erste Anzahl (n1) der Teilleiter (40) von der zweiten Anzahl (n2) der Teilleiterbahnen (50) verschieden ist.

3. Stator (8) nach einem der vorherigen Ansprüche,
wobei die voneinander elektrisch isolierten Teilleiter (40) im Nutabschnitt (26), insbesondere nach Art eines Roebelstabes, verdrillt sind.

4. Stator (8) nach einem der vorherigen Ansprüche,
wobei die Leiter (34) des Nutabschnitts (26) und die jeweiligen Leiterbahnen (36) des Wickelkopfabschnitts (28) im Verbindungsabschnitt (30) stoffschlüssig verbunden sind.

5. Stator (8) nach Anspruch 4,
wobei die stoffschlüssige Verbindung unter Verwendung von Nanopartikeln, insbesondere von Silber-Nanopartikeln, hergestellt ist.

6. Stator (8) nach einem der vorherigen Ansprüche,
wobei im Verbindungsabschnitt (30) zwischen den Leitern (34) des Nutabschnitts (26) und den jeweiligen Leiterbahnen (36) des Wickelkopfabschnitts (28) metallische Verbindungselemente (46) angeordnet sind.

7. Stator (8) nach Anspruch 6,
wobei die metallischen Verbindungselemente (46) keilförmig ausgeführt sind.

8. Stator (8) nach einem der vorherigen Ansprüche,
wobei eine Spule (22) mindestens zwei Windungen aufweist, wobei die Leiter (34) der jeweiligen Windung, insbesondere im Nutabschnitt (26), durch eine mäanderförmig angeordnete Leiterisolierung (44) voneinander elektrisch isoliert sind.

9. Stator (8) nach einem der vorherigen Ansprüche,
wobei in der Statorwickelkopfplatine (32) Kühlkanäle (52) angeordnet sind.

10. Stator (8) nach Anspruch 9,
wobei die Teilleiterbahnen (50), insbesondere äquidistant, um die Kühlkanäle (52) angeordnet sind.

11. Stator (8) nach einem der vorherigen Ansprüche,
wobei die Statorwickelkopfplatine (32) zumindest teilweise mit einem additiven Fertigungsverfahren hergestellt ist.

12. Elektrische rotierende Maschine (2) mit mindestens einem Stator (8) nach einem der Ansprüche 1 bis 11.

13. Gondelantrieb (56) mit zumindest einer elektrischen rotierenden Maschine (2) nach Anspruch 12.

14. Wasserfahrzeug (54), insbesondere Schiff, mit mindestens einem Gondelantrieb (56) nach Anspruch 13.

15. Verfahren zur Herstellung eines Stators (8) für eine elektrische rotierende Maschine (2) nach einem der Ansprüche 1 bis 11,
wobei die mindestens eine Statorwickelkopfplatine (32) auf einer Stirnseite des Statorblechpakets (20) aufgelegt wird und
wobei daraufhin die Leiter (34) des Nutabschnitts (26) und die Leiterbahnen (36) des Wickelkopfabschnitts (28), insbesondere stoffschlüssig, verbunden werden.

## Claims

1. Stator (8) for an electrical rotating machine (2), in particular for use in a pod drive (56), which stator has a laminated stator core (20) having coils (22), wherein the coils (22) each have at least one groove portion (26), at least one winding overhang portion (28) and at least one connecting portion (30),
wherein the winding overhang portion (28) is designed as a stator winding overhang board (32),
which is arranged at an end face of the laminated stator core (20) and has conducting tracks (36) integrated into an insulating main body (38),
wherein in each case a conductor (34) of the groove portion (26) and a conducting track (36) of the winding overhang portion (28) are connected in a connecting portion (30), wherein
- the conductors (34) of the groove portion (26) each have a first number (n1) of partial conductors (40) that are electrically insulated from each other and
- the conducting tracks (36) of the winding overhang portion (28) each have a second number (n2) of partial conducting tracks (50) that are electrically insulated from each other and
wherein the partial conductors (40) of the groove portion (26) that are electrically insulated from each other and the partial conducting tracks (50) of the winding overhang portion (28) that are electrically insulated from each other are electrically conductively connected in the connecting portion (30) .

2. Stator (8) according to claim 1,
wherein the first number (n1) of partial conductors (40) is different from the second number (n2) of partial conducting tracks (50).

3. Stator (8) according to one of the preceding claims, wherein the partial conductors (40) that are electrically insulated from each other in the groove portion (26) are twisted, in particular in the manner of a Roebel bar.

4. Stator (8) according to one of the preceding claims,
wherein the conductors (34) of the groove portion (26) and the respective conducting tracks (36) of the winding overhang portion (28) are connected with a material bond in the connecting portion (30).

5. Stator (8) according to claim 4,
wherein the material-bonded connection is established using nanoparticles, in particular silver nanoparticles.

6. Stator (8) according to one of the preceding claims,
wherein metallic connecting elements (46) are arranged in the connecting portion (30) between the conductors (34) of the groove portion (26) and the respective conducting tracks (36) of the winding overhang portion (28).

7. Stator (8) according to claim 6,
wherein the metallic connecting elements (46) are embodied as wedge-shaped.

8. Stator (8) according to one of the preceding claims,
wherein a coil (22) has at least two windings, wherein the conductors (34) of the respective winding, in particular in the groove portion (26), are electrically insulated from each other by a conductor insulation (44) arranged in a meandering shape.

9. Stator (8) according to one of the preceding claims,
wherein cooling ducts (52) are arranged in the stator winding overhang board (32).

10. Stator (8) according to claim 9,
wherein the partial conducting tracks (50) are arranged, in particular equidistantly, around the cooling ducts (52).

11. Stator (8) according to one of the preceding claims,
wherein the stator winding overhang board (32) is at least partially produced using an additive manufacturing method.

12. Electrical rotating machine (2) having at least one stator (8) according to one of claims 1 to 11.

13. Pod drive (56) having at least one electrical rotating machine (2) according to claim 12.

14. Watercraft (54), in particular a ship, having at least one pod drive (56) according to claim 13.

15. Method for manufacturing a stator (8) for an electrical rotating machine (2) according to one of claims 1 to 11, wherein the at least one stator winding overhang board (32) is placed on an end face of the laminated stator core (20) and wherein thereupon the conductors (34) of the groove portion (26) and the conducting tracks (36) of the winding overhang portion (28) are connected, in particular with a material bond.

## Revendications

1. Stator (8) d'une machine (2) électrique tournante, à utiliser notamment dans un entraînement (56) à nacelle, qui a un paquet (20) de tôles statoriques ayant des bobines (22), dans lequel les bobines (22) ont chacune au moins une partie (26) d'encoche, au moins une partie (28) de tête d'enroulement et au moins une partie (30) de liaison,
dans lequel la partie (28) de tête d'enroulement est conformée en platine (32) de tête d'enroulement statorique, qui est disposée d'un côté frontal du paquet (20) de tôles statoriques et qui a des pistes (36) conductrices intégrées dans un corps (38) de base isolant,
dans lequel respectivement un conducteur (34) de la partie (26) d'encoche et une piste (36) conductrice de la partie (28) de tête d'enroulement sont reliés dans une partie (30) de liaison, dans lequel
- les conducteurs (34) de la partie (26) d'encoche ont chacun un premier nombre (n1) de conducteurs (40) partiels isolés électriquement les uns des autres, et
- les pistes (36) conductrices de la partie (28) de tête d'enroulement ont chacune un deuxième nombre (n2) de pistes (50) conductrices partielles isolées électriquement les unes des autres, et
dans lequel les conducteurs (40) partiels isolés électriquement les uns des autres de la partie (26) d'encoche et les pistes (50) conductrices partielles isolées électriquement les unes des autres de la partie (28) de tête d'enroulement sont reliés électriquement d'une manière conductrice de l'électricité dans la partie (30) de liaison.

2. Stator (8) suivant la revendication 1,
dans lequel le premier nombre (n1) des conducteurs (40) partiels est différent du deuxième nombre (n2) des pistes (50) conductrices partielles.

3. Stator (8) suivant l'une des revendications précédentes, dans lequel les conducteurs (40) partiels isolés électriquement les uns des autres dans la partie (26) d'encoche sont torsadés, notamment à la manière d'une barre Roebel.

4. Stator (8) suivant l'une des revendications précédentes, dans lequel les conducteurs (34) de la partie (26) d'encoche et les pistes (36) conductrices respectives de la partie (28) de tête d'enroulement sont reliées à coopération de matière dans la partie (30) de liaison.

5. Stator (8) suivant la revendication 4,
dans lequel la liaison à coopération de matière est produite en utilisant des nanoparticules, notamment des nanoparticules d'argent.

6. Stator (8) suivant l'une des revendications précédentes, dans lequel des éléments (46) de liaison métalliques sont disposés dans la partie (30) de liaison entre les conducteurs (34) de la partie (26) d'encoche et les pistes (36) conductrices respectives de la partie (28) de tête d'enroulement.

7. Stator (8) suivant la revendication 6,
dans lequel les éléments (46) métalliques de liaison sont cunéiformes.

8. Stator (8) suivant l'une des revendications précédentes, dans lequel une bobine (22) a au moins deux spires, dans lequel les conducteurs (34) de la spire respective, notamment dans la partie (26) d'encoche sont isolés électriquement les uns des autres par une isolation (44) de conducteur disposée de manière sinueuse.

9. Stator (8) suivant l'une des revendications précédentes, dans lequel des canaux (52) de refroidissement sont disposés dans la platine (32) de la tête d'enroulement statorique.

10. Stator (8) suivant la revendication 9,
dans lequel les pistes (50) conductrices partielles sont disposées autour des canaux (52) de refroidissement, notamment de manière équidistante.

11. Stator (8) suivant l'une des revendications précédentes, dans lequel la platine (32) de tête d'enroulement statorique est fabriquée au moins en partie par un procédé de fabrication additive.

12. Machine (2) électrique tournante ayant au moins un stator (8) suivant l'une des revendications 1 à 11.

13. Entraînement (56) à nacelle ayant au moins une machine (2) électrique tournante suivant la revendication 12.

14. Véhicule (54) sur l'eau, notamment bateau, ayant au moins un entraînement (56) à nacelle suivant la revendication 13.

15. Procédé de fabrication d'un stator (8) d'une machine (2) électrique tournante suivant l'une des revendications 1 à 11,
dans lequel on met la au moins une platine (32) de tête d'enroulement statorique sur un côté frontal du paquet (20) de tôles statoriques, et
dans lequel ensuite on relie, notamment à coopération de matière, les conducteurs (34) de la partie (26) d'encoche et les pistes (36) conductrices de la partie (28) de tête d'enroulement.
